# EUROPEAN PATENT APPLICATION

(11) **EP 2 302 505 A2**
(43) Date of publication of application: **30.03.2011**
(21) Application number: 10175504.9
(22) Date of filing: 06.09.2010
(51) Int. Cl.: G06F 3/12

(54) **Print setting support apparatus and print setting support method**

(30) Priority: 16.09.2009 US 242974 P
(71) Applicant: Kabushiki Kaisha Toshiba, Minato-ku, Tokyo 105-8001 (JP); Toshiba TEC Kabushiki Kaisha, Tokyo 141-8664 (JP)
(72) Inventor: Mitani, Masateru, Shinagawa-ku Tokyo 141-8664 (JP)
(74) Representative: Gendron, Vincent Christian

(57) **Abstract**

A print setting support apparatus includes a content information acquisition section to acquire print content information relating to a content of a printing scheduled to be executed, a determination section to determine, based on the print content information acquired by the content information acquisition section, whether specified favorite setting is to be applied, a setting value acquisition section to acquire information relating to the specified favorite setting when it is determined that the specified favorite setting is to be applied, and a setting application section to automatically apply, as a print setting, a setting content of the specified favorite setting based on the information acquired by the setting value acquisition section.

## Description

### CROSS-REFERENCE TO RELATED APPLICATION(S)

This application is based upon and claims the benefit of priority from: US provisional application 61/242974, filed on September 16, 2009; the entire contents all of which are incorporated herein by reference.

### FIELD

Embodiments described herein relate generally to a technique to reduce an operation load in a print operation using a printer driver.

### BACKGROUND

Hitherto, when a print instruction is given to an image forming apparatus from a printer driver, a user is required to select a desired print setting on the printer driver.

In recent years, the functions of an image forming apparatus are increasing, and a technique is disclosed in which setting contents frequently used by the user are registered as "favorite setting" in the printer driver. According to the related art technique, the user can easily give a print instruction under a desired print setting by selecting the registered "favorite setting".

However, the above related art has a problem that the user must perform an operation of "selecting the favorite setting" and the specific additional operation is still required.

### BRIEF DESCRIPTION OF THE DRAWINGS

FIG. 1 is a system structural view showing a print processing system including a print setting support apparatus.
FIG. 2 is a function block diagram for explaining the print setting support apparatus.
FIG. 3 is a flowchart for explaining a flow of a registration process of "favorite setting" in the print setting support apparatus.
FIG. 4 is a view showing an example of a print screen of an application displayed on a display section 806 of a PC 1.
FIG. 5 is a view showing an example of a print setting screen of a printing by a printer driver.
FIG. 6 is a view showing a screen example of a GUI for inputting a setting name of "favorite setting" displayed on the display section 806.
FIG. 7 is a view showing an example of a recording file of "favorite setting" in a related art printer driver.
FIG. 8 is a view showing an example of a recording file of "favorite setting".
FIG. 9 is a flowchart showing a flow of a print setting in the print setting support apparatus.
FIG. 10 is a view showing a screen display example of a print setting screen 5' of the printer driver in a state where favorite setting is automatically applied.
FIG. 11 is a flowchart for explaining auto application of "favorite setting" in the print setting support apparatus of the embodiment.
FIG. 12 is a view showing another example of the print setting screen of the printer driver in the print setting support apparatus of the embodiment.

### DETAILED DESCRIPTION

In general, according to an embodiment, a print setting support apparatus includes a content information acquisition section, a determination section, a setting value acquisition section and a setting application section. The content information acquisition section acquires print content information relating to a content of a printing scheduled to be executed. The determination section determines, based on the print content information acquired by the content information acquisition section, whether a specified favorite setting as a previously set print setting is to be applied. The setting value acquisition section acquires information relating to the specified favorite setting when the determination section determines that the specified favorite setting is to be applied. The setting application section automatically applies, as a print setting, a setting content of the specified favorite setting based on the information acquired by the setting value acquisition section.

Hereinafter, embodiments will be described with reference to the drawings.

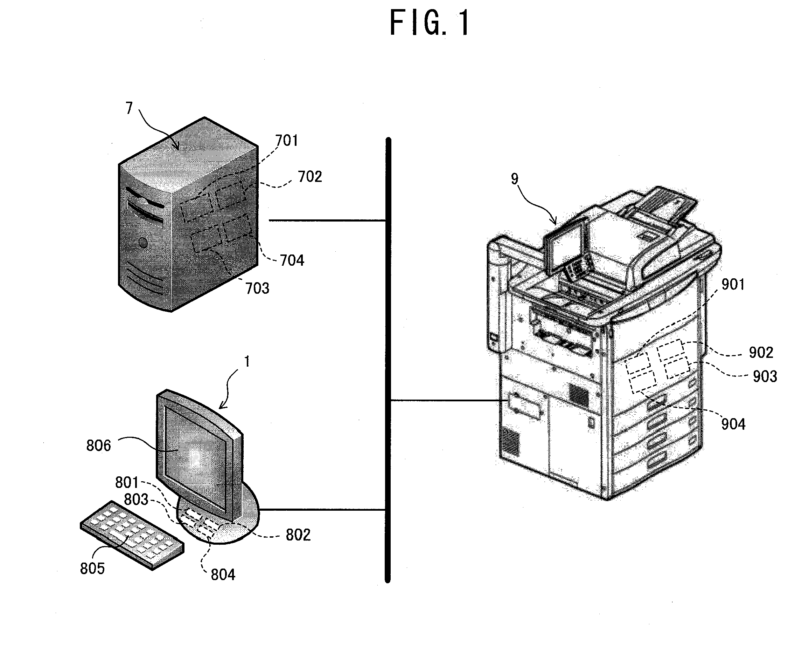

FIG. 1 is a system structural view showing a print processing system including a print setting support apparatus of an embodiment.

As shown in FIG. 1, the print processing system of the embodiment includes a PC (Personal Computer) 1, a server 7 and an MFP (Multi Function Peripheral) 9. Incidentally, here, although a case where an equipment to execute a printing is the MFP is exemplified, no limitation is made to this. It is needless to say that various equipments capable of performing the printing, such as a general printer, can be adopted.

The PC 1, the server 7 and the MFP 9 are connected to be capable of communicating with each other through a LAN (Local Area Network) or a WAN (Wide Area Network). Incidentally, the connection method may be wired communication or wireless communication as long as communication can be resultantly performed.

Here, the PC (Personal Computer) 1 has a function as the print setting support apparatus. The server 7 stores various information used in the print processing system. The MFP (Multi Function Peripheral) 9 can perform one-side printing, two-side printing, monochrome printing, color printing, N in 1 printing (layout printing), scanning and the like. The MFP 9 performs a printing, a scanning and the like by an instruction transmitted to the MFP 9 via the LAN from a printer driver installed in the PC 1.

The PC 1 includes a processor 801, an ASIC (Application Specific Integrated Circuit) 802, a MEMORY 803, a HDD (Hard Disk Drive) 804, an operation input section 805 and a display section 806.

The server 7 includes a processor 701, an ASIC 702, a MEMORY 703 and a HDD 704.

The MFP 9 includes a processor 901, an ASIC 902, a MEMORY 903 and a HDD 904.

In the print processing system of this embodiment, the processor 801, the processor 701 and the processor 901 serve to perform various processes in the print processing system, and serve to realize various functions by executing programs stored in the MEMORY 803, the MEMORY 703, the MEMORY 903, the HDD 804, the HDD 704, the HDD 904 and the like. Incidentally, it is needless to say that the processor 801, the processor 701 and the processor 901 can be realized by a CPU (Central Processing Unit) or an MPU (Micro Processing Unit) capable of executing equivalent arithmetic processing. Besides, the HDD 804, the HDD 704 and the HDD 904 can also be substituted by a storage device such as, for example, a flash memory.

The MEMORY 803, the MEMORY 703 and the MEMORY 903 can be constructed of, for example, a RAM (Random Access Memory), a ROM (Read Only Memory), a DRAM (Dynamic Random Access Memory), an SRAM (Static Random Access Memory), a VRAM (Video RAM), a flash memory or the like, and serve to store various information and programs used in the print processing system.

The display section 806 can be constructed of, for example, an electronic paper, an LCD (Liquid Crystal Display), an EL (Electronic Luminescence), a PDP (Plasma Display Panel), a CRT (Cathode Ray Tube) or the like.

The operation input section 805 can be constructed of, for example, a keyboard, a mouse, a touch panel, a touchpad, a graphics tablet, a dedicated button or the like.

Besides, the functions of the display section 806 and the operation input section 805 can be realized by a so-called touch panel display.

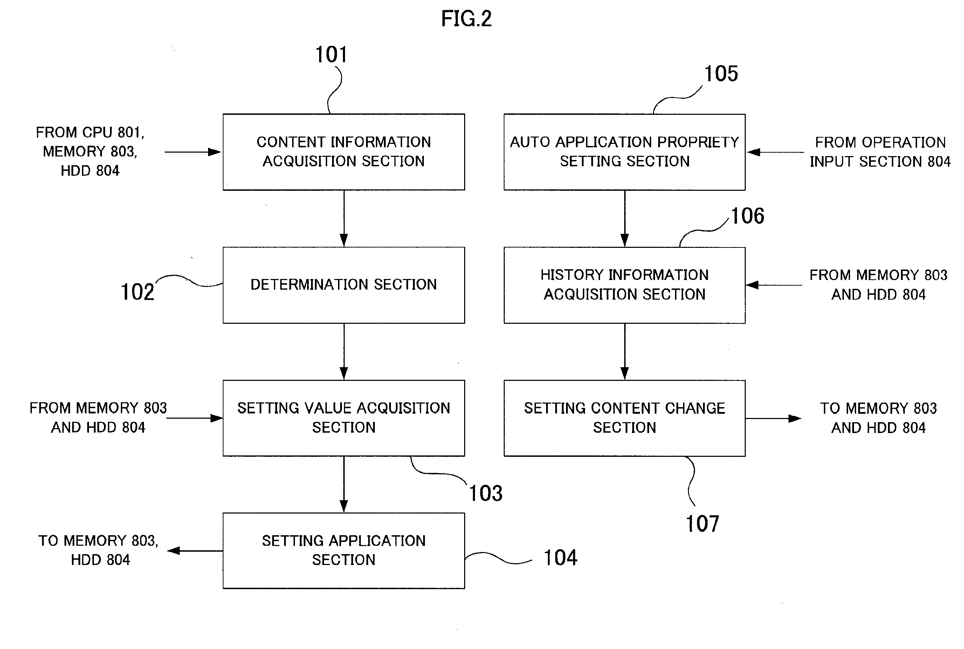

FIG. 2 is a function block diagram for explaining the print setting support apparatus.

The print setting support apparatus of this embodiment includes a content information acquisition section 101, a determination section 102, a setting value acquisition section 103, a setting application section 104, an auto application propriety setting section 105, a history information acquisition section 106, and a setting content change section 107.

The content information acquisition section 101 acquires "print content information" relating to the content of a printing scheduled to be executed from the MEMORY 803, the HDD 804, the server 7 or the like. Here, as "the printing scheduled to be executed", for example, a printing in which a print setting is scheduled to be performed from now on can be mentioned.

Specifically, the print content information acquired by the content information acquisition section 101 is, for example, as follow:
(1) identification information (application ID, etc.) for identifying an application which started a printer driver to instruct execution of the printing;
(2) process information of an equipment in which the printer driver to instruct execution of the printing is started,
(3) an extension (JPG, GIF, etc.) of a data file as an object of the printing;
(4) a specific character string contained in the data file as the object of the printing; and
(5) information relating to a color value of an image contained in the data file as the object of the printing.

Based on the print content information acquired by the content information acquisition section 101, the determination section 102 determines whether or not a specified "favorite setting" as a print setting previously set in the HDD 804 or the like is to be applied. Incidentally, it is not always necessary that the "favorite setting" is stored in the storage device provided in the PC 1, and for example, it can be stored in a storage device such as the HDD 704 provided in the server 7.

Specifically, the determination section 102 performs a determination process as described below.
(1) When an application indicated by identification information acquired by the content information acquisition section 101 is a specified application in which the specified favorite setting is to be applied, it is determined that the specified favorite setting is automatically applied.
(2) When process information acquired by the content information acquisition section 101 is specified process information in which the specified favorite setting is to be applied, it is determined that the specified favorite setting is automatically to be applied.
(3) When an extension acquired by the content information acquisition section 101 is a specified extension in which the specified favorite setting is to be applied, it is determined that the specified favorite setting is automatically to be applied.
(4) When the content information acquisition section 101 acquires a specific character string, it is determined that the specified favorite setting is not automatically to be applied.
(5) When the content information acquisition section 101 acquires information relating to a specific color value contained in the data file, it is determined that the specified favorite setting is automatically to be applied.

When the determination section 102 determines that the specified "favorite setting" is to be applied, the setting value acquisition section 103 acquires information relating to the specified favorite setting.

Incidentally, when the setting value acquisition section 103 can not acquire the specified "favorite setting" in the equipment (for example, the PC 1 etc.) in which the printer driver to instruct execution of the printing is started, the specified "favorite setting" can be acquired from the server 7 or the like (external equipment) connected to the PC 1 (print setting support apparatus) to be capable of communicating therewith.

Besides, when the determination section 102 determines that the specified "favorite setting" is to be applied as the print setting, the setting value acquisition section 103 acquires, from, for example, the HDD 804, information relating to the specified favorite setting previously correlated with the application indicated by the identification information acquired by the content information acquisition section 101.

The setting application section 104 automatically applies the setting content of the specified "favorite setting" as the print setting based on the information acquired by the setting value acquisition section 103.

Only when the automatic application propriety setting section 105 sets that the setting content of the specified favorite setting is automatically applied as the print setting, the setting application section 104 automatically applies the setting content of the specified "favorite setting" as the print setting.

The automatic application propriety setting section 105 sets whether or not the setting content of the specified favorite setting is automatically applied as the print setting based on an operation input of a user to the operation input section 805 and based on the information acquired by the setting value acquisition section 103.

The history information acquisition section 106 acquires history information (log data) indicating operation history of the user in the equipment in which the printer driver to instruct the execution of the printing is started. Here, it is assumed that "the equipment in which the printer driver to instruct the execution of the printing is started" is the PC 1. Besides, the log data as the history information is acquired from the HDD 804 by the processor 801.

The setting content change section 107 changes (updates) the content of the specified "favorite setting" based on the history information acquired by the history information acquisition section 106.

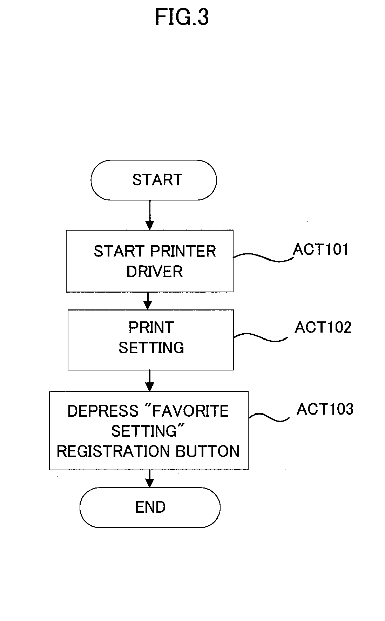

FIG. 3 is a flowchart for explaining a flow of a registration of "favorite setting" in the print setting support apparatus.

The user operates the operation input section 805 and can register "favorite setting" having an arbitrary setting content with respect to plural print setting items such as two-side printing, one-side printing, color printing and monochrome printing.

First, the processor 801 starts a printer driver from, for example, a document creation application or an image browsing application based on the operation input of the user to the operation input section 805 of the PC 1 (ACT 101).

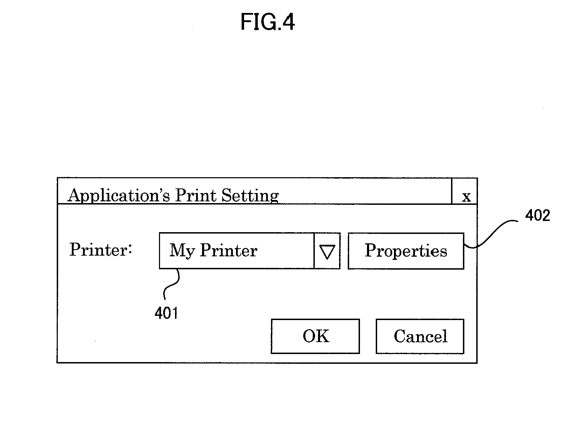

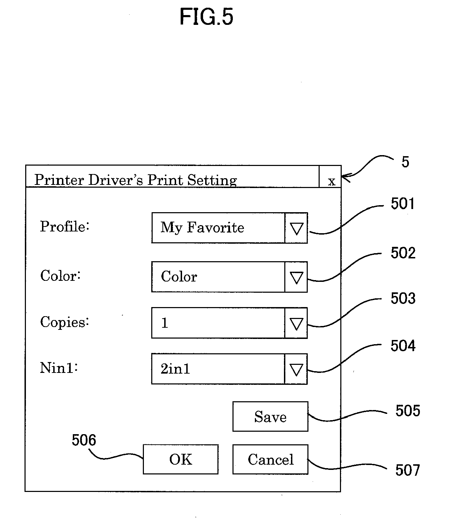

FIG. 4 is a view showing an example of a print setting screen of an application displayed on the display section 806 of the PC 1. The user operates the operation input section 805, selects an arbitrary one of plural printer drivers listed in a pull-down menu 401, and depresses a "Properties" button 402 to start a print setting screen (see FIG. 5) for a printing of the selected printer driver.

The user operates the operation input section 805 or the like, and performs print setting on a GUI 5 of the started printer driver, in which plural setting items 501 to 504 are a desired setting content (ACT 102).

The user operates the operation input section 805 or the like, and depresses a "Save" button 505 on the GUI 5 displayed on the display section 806 of the PC 1 for registration to "favorite setting" (ACT 103).

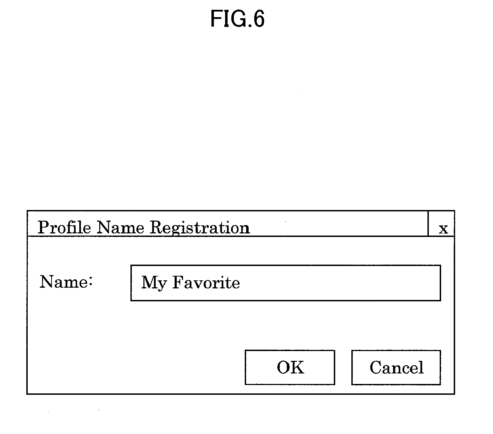

The user can input a setting name of the "favorite setting" at the time of registration of the "favorite setting" on the GUI 5. FIG. 6 is a view showing a screen example of the GUI for inputting the setting name of the "favorite setting" displayed on the display section 806. When the user depresses the "Save" button 505, the processor 801 displays a UI screen shown in FIG. 6 on the display section 806.

At the time of registration of the "favorite setting" in the printer driver, the processor 801 causes the HDD 804 to store, as a part of the "favorite setting", a process name (process ID, etc in addition to this) of the application which starts the printer driver.

When the above setting is performed, the printer driver causes the HDD 804 to store, as a recording file, the value set on the GUI and the name of the application which started the printer driver.

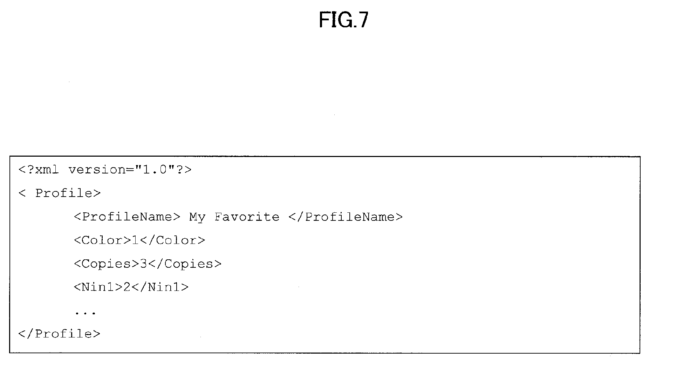

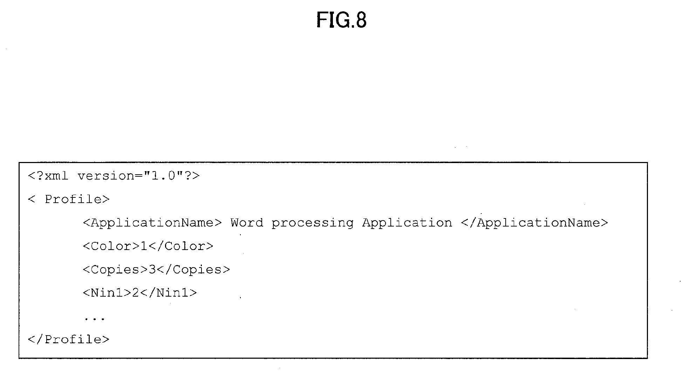

FIG. 7 is a view showing an example of a recording file of "favorite setting" in a related art printer driver. In the example shown in FIG. 7, the name "My favorite" given to the recording file is recorded. FIG. 8 is a view showing an example of a recording file of "favorite setting" in this embodiment. In the example shown in FIG. 8, the name "Word processing application" of the application correlated with the setting content of the recording file is recorded.

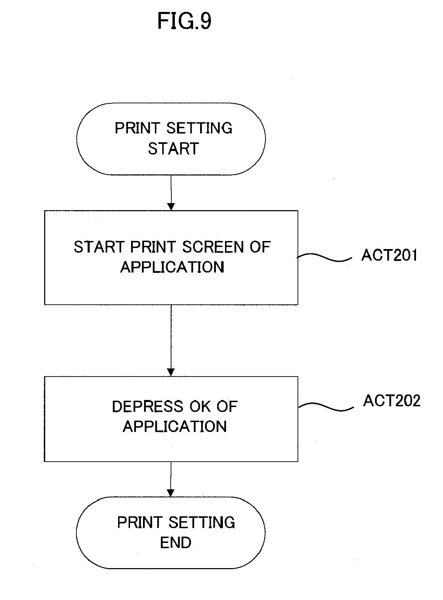

FIG. 9 is a flowchart showing a flow of a print setting in the print setting support apparatus of this embodiment.

This is the flowchart showing the flow of a print setting in the print setting support apparatus of this embodiment.

First, when the user operates the operation input section 805 to give a print instruction from an arbitrary application, the processor 801 displays a UI of a print screen of the application on the display section 806 (ACT 201).

When the user depresses an "OK" button on the print screen UI (see FIG. 4), the processor 801 automatically acquires the process name of the application, which started the printer driver, from a specified storage area of the MEMORY 803 or the HDD 804, and automatically applies, as the print setting, the "favorite setting" previously correlated with the process name.

When the user depresses the "OK" button on the print screen UI (see FIG. 4), the processor 801 starts the printing under the "favorite setting" (ACT 202).

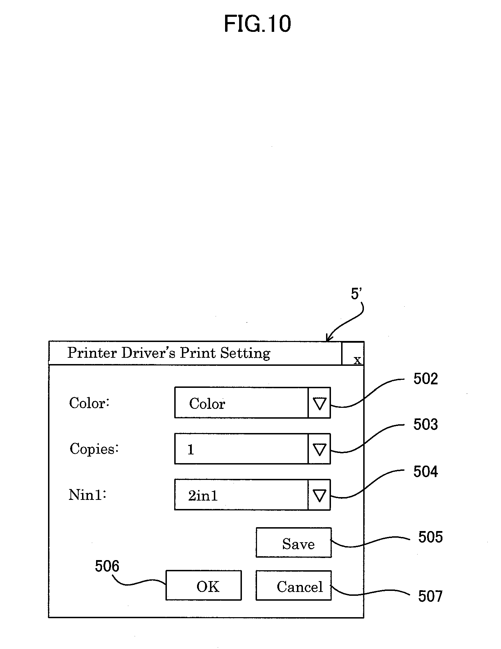

FIG. 10 is a view showing a screen display example of a print setting screen 5' of the printer driver in a state where the favorite setting is automatically applied. As shown in the drawing, according to the print setting support apparatus of this embodiment, since the user is not required to select the "favorite setting", the setting item corresponding to the pull-down menu 501 shown in FIG. 5 is not displayed.

By adopting such structure, the user can automatically apply the previously set print setting without performing a specific print setting operation at the time of print execution, and can easily obtain a desired print result.

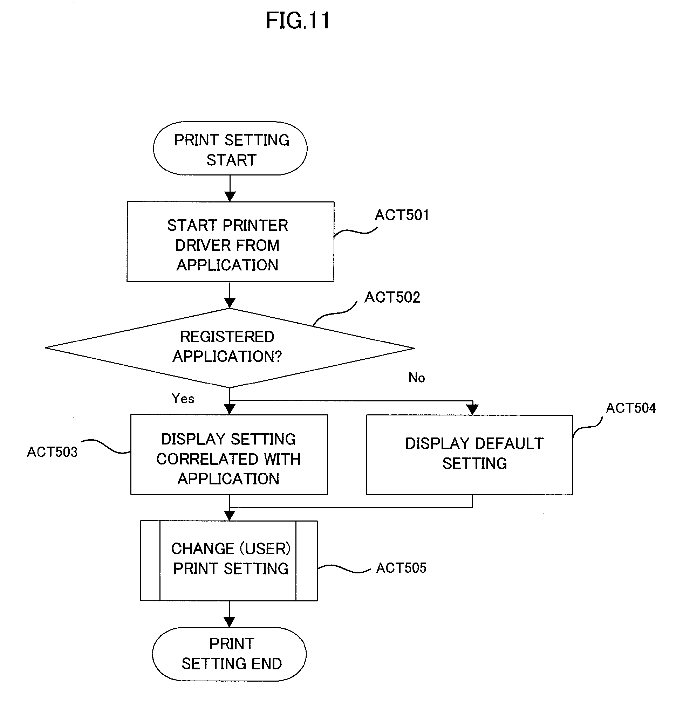

FIG. 11 is a flowchart for explaining auto application of the "favorite setting" in the print setting support apparatus of this embodiment.

First, the processor 801 starts the printer driver from, for example, a document creation application or an image browsing application based on the operation input of the user to the operation input section 805 or the like of the PC 1 (ACT 501).

Next, when the application to issue a print instruction is the application already registered in a specific storage area of the HDD 804 (ACT 502, Yes), the processor 801 causes the display section 806 to display a GUI in which the "favorite setting" previously stored in the HDD 804 or the like correlated with the identification information of the application is applied as the print setting (ACT 503).

On the other hand, when the application to issue the print instruction is not the application already registered in the specific storage area of the HDD 804 (ACT 502, No), the processor 801 causes the display section 806 to display a GUI in which default print setting of the printer driver previously stored in the HDD 804 or the like is applied (ACT 504).

When the user gives some operation input to the operation input section 805, the processor 801 performs change of the print setting or the like according to the operation content, and the print setting is completed (ACT 505).

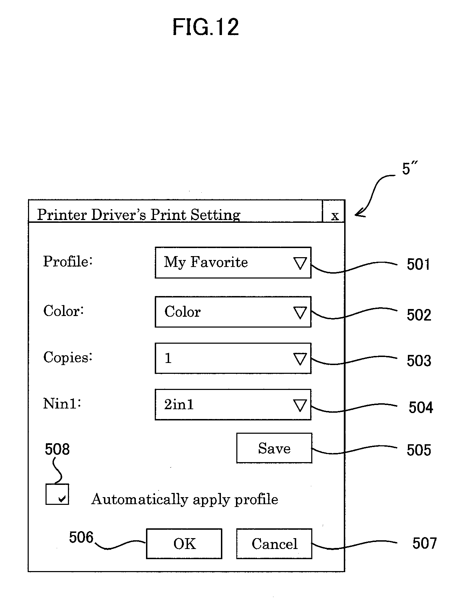

FIG. 12 is a view showing another example of the print setting screen of the printer driver in the print setting support apparatus of this embodiment.

A checkbox 508 for enabling selection of whether or not "favorite setting" is automatically applied is provided on a print setting screen 5" shown in FIG. 12.

When the user operates the operation input section 805 and the checkbox 508 is checked, the processor 801 automatically performs the application of the "favorite setting" to the print setting. On the other hand, when the checkbox 508 is not checked, the automatic application of the "favorite setting" to the print setting is not performed, and the printing is performed based on the default print setting set in the printer driver or the print setting manually set by the user.

By doing so, the user can select whether or not the previously set "favorite setting" is automatically applied.

The respective operations of the process in the print setting support apparatus are realized by causing the processor 801 to execute a print setting support program stored in the memory 802. Here, the print setting support program can be containedin, for example, a printer driver program for realizing the function of the printer driver.

Further, the program to cause the computer constituting the print setting support apparatus to execute the foregoing respective operations can be provided as the print setting support program. In this embodiment, although the description is made on the case where the program for realizing the function to carry out the invention is previously stored in the storage area provided in the apparatus, no limitation is made to this. The same programmay be downloaded from a network to the apparatus, or a computer readable recording medium storing the same program may be installed in the apparatus. A form of the recording medium may be any form as long as the recording medium can store a program and can be read by the computer. Specifically, the recording medium may be, for example, an internal storage device mounted in the computer, such as a ROM or a RAM, a portable storage medium such as a CD-ROM, a flexible disk, a DVD disk, a magneto-optical disk or an IC card, a database to hold a computer program, another computer and its database, a transmission medium on a line or the like. Besides, the function obtained by install or download in advance in this way may be realized in cooperation with an OS (Operation System) in the apparatus.

Incidentally, the program may be an execution module in which a part or the whole thereof is dynamically created.

Besides, it is needless to say that at least a part of various processes realized by causing the processor to execute the program in the above embodiments can be executed by a circuit in the ASIC 802.

As described above in detail, according to the technique disclosed in this specification, the technique to reduce the operation load in the case where print setting is performed can be provided.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the sprit of the inventions. The accompanying claims and their equivalents are intended to cover such forms or modifications as would fall within the scope and spirit of the inventions.

## Claims

1. A print setting support apparatus comprising;
a content information acquisition section to acquire print content information relating to a content of a printing scheduled to be executed;
a determination section to determine, based on the print content information acquired by the content information acquisition section, whether a specified favorite setting as a previously set print setting is to be applied;
a setting value acquisition section to acquire information relating to the specified favorite setting when the determination section determines that the specified favorite setting is to be applied; and
a setting application section to automatically apply, as a print setting, a setting content of the specified favorite setting based on the information acquired by the setting value acquisition section.

2. The apparatus of claim 1, wherein
the content information acquisition section acquires identification information for identifying an application which started a printer driver to instruct execution of the printing, and
the determination section determines that when the application indicated by the identification information acquired by the content information acquisition section is a specific application in which the specified favorite setting is to be applied, the specified favorite setting is to be automatically applied.

3. The apparatus of claim 2, wherein when the determination section determines that the specified favorite setting is to be applied, the setting value acquisition section acquires information relating to the specified favorite setting previously correlated with the application indicated by the identification information acquired by the content information acquisition section.

4. The apparatus of claim 1, further comprising an auto application propriety setting section to set whether the setting content of the specified favorite setting is automatically applied as the print setting based on an operation input of a user and based on the information acquired by the setting value acquisition section, wherein
the setting application section automatically applies the setting content of the specified favorite setting as the print setting only when the auto application propriety setting section sets that the setting content of the specified favorite setting is automatically applied as the print setting.

5. The apparatus of claim 1, wherein
the content information acquisition section acquires process information of an equipment in which a printer driver to instruct execution of the printing is started, and
the determination section determines that the specified favorite setting is to be automatically applied when the process information acquired by the content information acquisition section is specified process information in which the specified favorite setting is to be applied.

6. The apparatus of claim 1, wherein
the content information acquisition section acquires an extension of a data file as an object of the printing, and
the determination section determines that the specified favorite setting is to be automatically applied when the extension acquired by the content information acquisition section is a specified extension in which the specified favorite setting is to be applied.

7. The apparatus of claim 1, wherein
the content information acquisition section acquires a specific character string contained in a data file as an object of the printing, and
the determination section determines that the specified favorite setting is not to be automatically applied when the content information acquisition section acquires the specific character string.

8. The apparatus of claim 1, wherein
the content information acquisition section acquires information relating to a color value of an image contained in a data file as an object of the printing, and
the determination section determines that the specified favorite setting is to be automatically applied when the content information acquisition section acquires information relating to a specific color value contained in the data file.

9. The apparatus of claim 1, wherein
when the setting value acquisition section can not acquire the specified favorite setting in an equipment in which a printer driver to instruct execution of the printing is started, the setting value acquisition section acquires the specified favorite setting from an external equipment connected to be capable of communicating with the print setting support apparatus.

10. The apparatus of claim 1, further comprising:
a history information acquisition section to acquire history information indicating operation history of a user in an equipment in which a printer driver to instruct execution of the printing is started; and
a setting content change section to change the content of the specified favorite setting based on the history information acquired by the history information acquisition section.

11. A print setting support method comprising; acquiring print content information relating to a content of a printing scheduled to be executed;
determining, based on the acquired print content information, whether a specified favorite setting as a previously set print setting is to be applied;
acquiring information relating to the specified favorite setting when it is determined that the specified favorite setting is to be applied; and
automatically applying, as a print setting, a setting content of the specified favorite setting based on the acquired information relating to the specified favorite setting.

12. The method of claim 11, wherein
identification information for identifying an application which started a printer driver to instruct execution of the printing is acquired, and
when the application indicated by the acquired identification information is a specific application in which the specified favorite setting is to be applied, it is determined that the specified favorite setting is to be automatically applied.

13. The method of claim 12, wherein when it is determined that the specified favorite setting is to be applied, information relating to the specified favorite setting previously correlated with the application indicated by the acquired identification information is acquired.

14. The method of claim 11, further comprising setting whether the setting content of the specified favorite setting is automatically applied as the print setting based on an operation input of a user and based on the acquired information relating to the specified favorite setting, wherein
only when it is set that the setting content of the specified favorite setting is automatically applied as the print setting, the setting content of the specified favorite setting is automatically applied as the print setting.

15. The method of claim 11, wherein
process information of an equipment in which a printer driver to instruct execution of the printing is started is acquired, and
when the acquired process information is specified process information in which the specified favorite setting is to be applied, it is determined that the specified favorite setting is to be automatically applied.

16. The method of claim 11, wherein
an extension of a data file as an object of the printing is acquired, and
when the acquired extension is a specified extension in which the specified favorite setting is to be applied, it is determined that the specified favorite setting is to be automatically applied.

17. The method of claim 11, wherein
a specific character string contained in a data file as an object of the printing is acquired, and
when the specific character string is acquired, it is determined that the specified favorite setting is not to be automatically applied.

18. The method of claim 11, wherein information relating to a color value of an image contained in a data file as an object of the printing is acquired, and
when information relating to a specific color value is contained in the data file, it is determined that the specified favorite setting is to be automatically applied.

19. The method of claim 11, wherein
when the specified favorite setting can not be acquired in an equipment in which a printer driver to instruct execution of the printing is started, the specified favorite setting is acquired from an external equipment.

20. The method of claim 11, further comprising:
acquiring history information indicating operation history of a user in an equipment in which a printer driver to instruct execution of the printing is started; and
changing the content of the specified favorite setting based on the acquired history information.
